**Europäisches Patentamt**

**European Patent Office**

**Office européen des brevets**

(19)

(11) Veröffentlichungsnummer: **0 016 866**
**B1**

(12) # EUROPÄISCHE PATENTSCHRIFT

(45) Veröffentlichungstag der Patentschrift:
26.05.82

(21) Anmeldenummer: 79105148.5

(22) Anmeldetag: 13.12.79

(51) Int. Cl.³: **G 11 B 15/58, G 01 L 19/04**

(54) **Einrichtung zum Unwirksammachen von durch Temperaturschwankungen verursachten Abweichungen der Ausgangsspannung eines Druckwandlers In Magnetbandgeräten.**

(30) Priorität: 06.04.79 DE 2914037

(43) Veröffentlichungstag der Anmeldung:
15.10.80 Patentblatt 80/21

(45) Bekanntmachung des Hinweises auf die Patenterteilung:
26.05.82 Patentblatt 82/21

(84) Benannte Vertragsstaaten:
AT BE CH FR GB IT NL

(56) Entgegenhaltungen:
DE-A1-2 736 946
DE-B1-2 840 957

Elektronische Rechenanlagen 1968,
Seiten 181–186

(73) Patentinhaber: **SIEMENS AKTIENGESELLSCHAFT**
**Berlin und München, Postfach 22 02 61,**
**D-8000 München 22 (DE)**

(72) Erfinder: **Kegler, Ernst, Oliviastrasse 8,**
**D-8000 München 71 (DE)**
Erfinder: **Meyer, Franz-Josef, Nordenstrasse 81,**
**D-8080 Emmering (DE)**

## Einrichtung zum Unwirksammachen von durch Temperaturschwankungen verursachten Abweichungen der Ausgangsspannung eines Druckwandlers in Magnetbandgeräten.

Die Erfindung bezieht sich auf eine Einrichtung zum Unwirksammachen von durch Temperaturänderungen verursachten Abweichungen der Ausgangsspannung eines Druckwandlers beim Messen des Druckes in der Pufferkammer von mit einer Analogregelung arbeitenden Magnetbandgeräten.

Magnetbandgeräte für Datenverarbeitungssysteme verwenden in der Regel sogenannte Pufferkammern, in denen ein Teil des Magnetbandes zwischengespeichert wird. Bei solchen Bandgeräten unterscheidet man zwischen digitaler Regelung der Bandwickel abhängig vom Über- oder Unterschreiten von Schranken in der Pufferkammer, meist Lichtschranken, und analoger Regelung, bei der, z.B. mit Hilfe eines Druckwandlers, der in einem bestimmten Teil der Pufferkammer herrschende und von der Stellung der Bandschlaufe in der Pufferkammer abhängige Druck gemessen und in eine elektrische Grösse, z.B. eine Spannung umgewandelt wird (Elektronische Rechenanlagen 1968, S. 181–186)

Die Ausgangsspannung solcher Druckwandler ist zum einen von dem an ihrem Eingang liegenden Druck, zum anderen aber auch von der herrschenden Umgebungstemperatur abhängig. Dabei tritt häufig der Fall ein, dass unterschiedliche Exemplare ein und desselben Types von Druckwandlern einen unterschiedlich grossen und noch dazu positiven oder negativen Temperaturkoeffizienten aufweisen.

In Magnetbandgeräten mit analoger Regelung wird aber angestrebt, dass die Bandschlaufe ihre Ruhe- oder Normallage in der Pufferkammermitte hat und dass ein Abweichen der Bandschlaufe von dieser Ruhe- oder Mormallage zu einem Nachsteuern des zugehörigen Wickelmotors derart führt, dass die gegebenenfalls aus dieser Ruhe- oder Normallage ausgewanderte Bandschlaufe wieder dorthin gebracht wird. Würde man nun Druckwandler mit den oben erwähnten Eigenschaften verwenden, dann würde dies dazu führen, dass bei Erwärmung des Gerätes die Bandschlaufe von ihrer Normallage in der Kammermitte nach oben oder unten wegwandert. Für die Normal- oder Ruhelage des Bandes hätte dies zwar an sich noch keine Bedeutung. Ein Auswandern aus der Normallage des Bandes hätte aber für den laufenden Betrieb eines Magnetbandgerätes dieser Art den Nachteil, dass das Magnetband in der einen oder anderen Richtung nicht mehr in dem gewünschten Mass beschleunigt werden kann, ohne an die Grenzen der Pufferkammer zu gelangen.

Eine Kompensation des Temperaturganges des Druckwandlers ist zwar möglich und bekannt, aber nur durch individuelles Ausmessen eines jeden Druckwandlers und durch Auswahl entgegengesetzt temperaturabhängiger Elemente.

Der vorliegenden Erfindung lag daher die Aufgabe zugrunde, eine Einrichtung zum Kompensieren von durch Temperaturänderungen verursachten Abweichungen der Ausgangsspannung eines Druckwandlers zu schaffen, bei der nicht darauf Rücksicht genommen werden muss, ob der verwendete Druckwandler einen grossen oder kleinen bzw. einen positiven oder negativem Temperaturkoeffizienten aufweist.

Erfindungsgemäss wird dies erreicht durch einen Temperaturfühler zum Erzeugen einer von der Temperatur des Druckwandlers abhängigen Spannung, durch einen Differenzverstärker mit einem zwischen seine beiden Eingänge geschalteten Potentiometer, dessen einstellbarer Abgriff mit dem Ausgang des Temperaturfühlers verbunden ist, und durch einen Operationsverstärker, dessen Eingang zum einen mit dem Ausgang des Differenzverstärkers und zum anderen mit dem Ausgang des Druckwandlers verbunden ist.

Die erfindungsgemässe Einrichtung hat den Vorteil, dass beim Bau von Magnetbandgeräten mit analoger Regelung, in denen Druckwandler der oben genannten Art verwendet werden, keinerlei kostspielige Ermittlung des Temperaturkoeffizienten der Ausgangsspannung der verwendeten Druckwandler mehr notwendig ist. Weiterhin wird die individuelle Dimensionierung von Kompensationsmitteln dadurch sehr vereinfacht, dass die Steilheit und die Richtung der Kompensationsspannung für die Ausgangsspannung des Druckwandlers mit einem einzigen Potentiometer einstellbar ist.

Die Erfindung wird nachstehend anhand der in der Zeichnung dargestellten Ausführungsbeispiele näher erläutert.

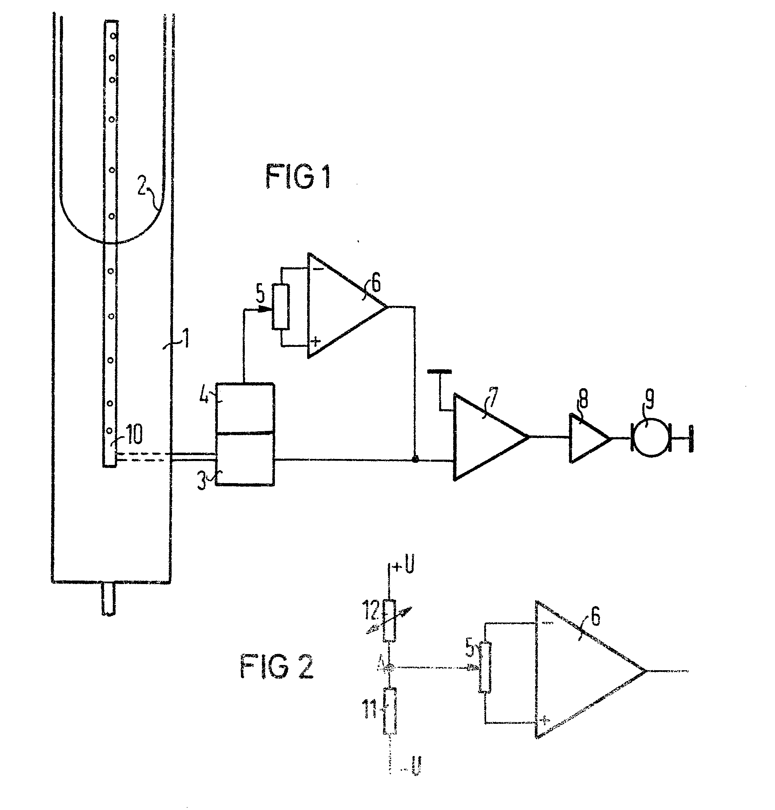

Die in Figur 1 schematisch dargestellte Anordnung zeigt einen Teil einer Vakuumpufferkammer 1 eines Magnetbandgerätes, in welcher sich eine Bandschlaufe 2 befindet. In der Rückwand der Pufferkammer 1 befindet sich in bekannter Weise ein mit kleinen Bohrungen zur Pufferkammer hin versehener Raum 10 (Mischkammer), in den die Schlauchleitung eines Druckwandlers 3 einmündet, um den Druck in der Mischkammer 10 zu messen. Dieser Druck ist abhängig von der Lage der Bandschlaufe 2 in der Pufferkammer. Es ist ein Temperaturfühler 4 vorgesehen, der eine von der Temperatur des Druckwandler 3 abhängige Spannung erzeugt. Diese Spannung wird dem einstellbaren Abgriff eines Potentiometers 5 zugeleitet, das zwischen die beiden Eingänge eines Differenzverstärkers 6 geschaltet ist. Der Ausgang des Differenzverstärkers 6 ist zusammen mit dem Ausgang des Druckwandlers 3 an den Eingang eines Operationsverstärkers 7 angeschlossen, dessen Ausgangssignal über einen Endverstärker 8 den der Vakuumpufferkammer 1 zugeordneten Wickelmotor 9 steuert.

Figur 2 zeigt eine besonders vorteilhafte Ausführungsform für die Einrichtung 4. Diese besteht aus einem auf dem Druckwandler 3 selbst angeordneten Heissleiter 12, der mit einem Festwiderstand 11 elektrisch in Reihe geschaltet an einer festen Spannung +U, −U liegt und an dessen Verbindungspunkt A mit dem Festwiderstand 11 die temperaturabhängige Spannung abgegriffen wird.

Die in Figur 1 dargestellte und insbesondere in der Form der Figur 2 ausgeführte Einrichtung ar-beitet folgendermassen: Der Spannungsteiler be-stehend aus dem Heissleiter 12 und dem Festwiderstand 11 ist zweckmässigerweise so dimensioniert, dass bei Normaltemperatur am Punkt A ein Potential von Null Volt herrscht. In diesem Zustand wird die Ausgangsspannung des Operationsverstärkers 7 gemessen.

Nach Erwärmung des Druckwandlers und des auf ihm angeordneten Heissleiters 12 auf eine beliebige, im zulässigen Arbeitsbereich des Druckwandlers liegende Temperatur wird der dann am Ausgang des Operationsverstärkers 7 gemessene Wert mit dem Potentiometer 5 wieder auf den bei Normaltemperatur gemessenen Wert eingestellt. Die Höhe der Temperatur, bei der diese Neueinstellung erfolgt, ist im zulässigen Arbeitsbereich des Druckwandlers ohne Bedeutung, da sich in diesem Bereich sowohl die Ausgangsspannung des Druckwandlers als auch der Widerstand des Heissleiters 12 linear mit der Temperatur ändern. Mit dem Verändern der Einstellung des Potentiometers 5 werden damit zwei Gerade zur Deckung gebracht und es ist deshalb unerheblich, bei welcher Temperatur dies erfolgt.

## Patentansprüche

1. Einrichtung zum Unwirksammachen von durch Temperaturveränderungen verursachten Abweichungen der Ausgangsspannung eines Druckwandlers (3) beim Messen des Druckes in der Pufferkammer (1) von mit einer Analogrege-lung arbeitenden Magnetbandgeräten, gekenn-zeichnet durch einen Temperaturfühler (4) zum Erzeugen einer von der Temperatur des Druckwandlers (3) abhängigen Spannung, durch einen Differenzverstärker (6) mit einem zwischen seine beiden Eingänge geschalteten Potentiometer (5) dessen einstellbarer Abgriff mit dem Ausgang des Temperaturfühlers (4) verbunden ist, und durch einen Operationsverstärker (7), dessen Eingang zum einen mit dem Ausgang des Differenzverstärkers (6) und zum anderen mit dem Ausgang des Druckwandlers (3) verbunden ist.

2. Einrichtung nach Anspruch 1, dadurch gekennzeichnet, dass der Temperaturfühler aus einem auf dem Druckwandler (3) selbst angeordneten Heissleiter (12) besteht, der mit einem Festwiderstand (11) elektrisch in Reihe geschaltet an einer festen Spannung (+U, −U) liegt und an dessen Verbindungspunkt (A) mit dem Festwiderstand (11) die temperaturabhängige Spannung abgegriffen wird.

## Revendications

1. Installation pour rendre inactifs les écarts, dus à des variations de la température, de la tension de sortie d'un transducteur de pression (3) lors de la mesure de la pression dans la colonne pneumatique (1) d'appareils à bande magnétique opérant avec une régulation analogique, caractérisée par une sonde thermique (4) pour produire une tension qui dépend de la température du transducteur de pression (3), par un amplificateur différentiel (6) à potentiomètre (5) monté entre ses deux entrées et dont la prise réglable est reliée à la sortie de la sonde de température (4) et par un amplificateur opérationnel (7) dont l'entrée est reliée d'une part à la sortie de l'amplificateur différentiel (6) et d'autre part à la sortie du transducteur de pression (3).

2. Installation selon la revendication 1, caractérisée par le fait que la revendication 1, caractérisée par une thermistance (12) montée sur le transducteur de pression (3) lui-même et qui, reliée en série avec une résistance fixe (11), est à une tension fixe (+U, −U), la tension qui dépend de la température étant prélevée au niveau du point de liaison (A) entre la thermistance (12) et la résistance fixe (11).

## Claims:

1. A device for rendering ineffective temperature dependant deviations in the output voltage of a pressure transducer (3) when measuring pressure in a buffer chamber (1) of magnetic tape devices which operate with an analogue regulation, characterised in that a temperature sensor (4) is provided for generating a voltage which is dependant of the temperature of the pressure transducer (3), and a differential amplifier (6) is provided having a potentiometer (5) connected between the two inputs of the amplifier with its adjustable tapping connected to the output of the temperature sensor (4), and an operational amplifier (7) is provided whose input is connected to the output of the differential amplifier (6) and to the output of the pressure transducer (3).

2. A device as claimed in claim 1, characterised in that the temperature sensor consists of a hot-conductor (12) arranged on the pressure transducer (3) itself and electrically connected in series with a fixed resistor (11) between fixed potentials (+U, −U) to supply the temperature-dependant voltage at their junction (A).

FIG 1

FIG 2